# EUROPEAN PATENT APPLICATION

(11) **EP 2 354 146 A1**
(43) Date of publication of application: **10.08.2011**
(21) Application number: 09820673.3
(22) Date of filing: 27.04.2009
(51) Int. Cl.: C07F 9/576

(54) **METHOD FOR INTRODUCING FUNCTIONAL GROUP TO SURFACE OF MATERIAL**

(30) Priority: 14.10.2008 KR 20080100808
(71) Applicant: Kangnung-Wonju National University Industry Academy Cooperation Group, Gangwon-do 210-702 (KR)
(72) Inventor: CHOI, Suk-Jung, Gangneung-si Gangwon-do 210-140 (KR); CHOI, Byung-Hak, Gangneung-si Gangwon-do 210-100 (KR)
(74) Representative: Liebl, Thomas
(86) International application number: PCT/KR2009/002195
(87) International publication number: WO 2010/044523

(57) **Abstract**

The present invention relates to a method for introducing a functional group to the surface of a material. The present invention provides a method for introducing a mixture of a lipid and a compound containing a functional group to the surface of a material. The method, for example, comprises the steps of: mixing a lipid with a compound containing a functional group to form liposome; and introducing the liposome to the surface of a material. The method enables a simple process and the reduction of processing time, compared with conventional chemical surface treatment methods. Additionally, the method ensures high efficiency and reproducibility when fixing a receptor on the surface of a material. Furthermore, the method does not need to use various reagents and is simple, so people unfamiliar with chemistry can utilize the method easily.

## Description

### Technical Field

The present invention relates to surface chemistry. More particularly, the present invention relates to a method for introducing a functional group onto the surface of a material. The functional group serves as a linker to immobilize a receptor onto the material surface or it itself functions as a receptor.

### Background Art

The introduction of functional groups onto the surface of materials (e.g., solids or particles) has attracted keen interest because materials with functional groups attached to them find applications in various fields related to, for example, as biosensors, gas sensors, nanoparticles used in diagnosis or drug delivery, liposomes used in diagnosis or drug delivery, chromatography, etc. As such, the functional groups may be used to immobilize biological macromolecules acting as receptors, or may perform molecular recognition themselves.

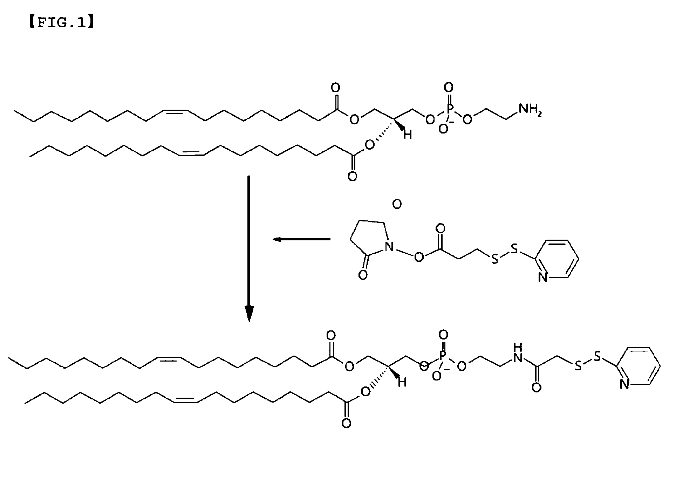

To be used to immobilize receptors onto the surfaces of limposomes, specific functional groups are introduced typically into phosphatidylethanolamine (PE) because the amino group present in the head group of this lipid can readily undergo a chemical reaction. For instance, a liposome prepared from lipids including PE may be reacted with N-succinimidyl pyridyl dithiopropionate (SPDP) to give a dithiopyridyl group (refer to FIG. 1). A receptor having a thiol group may be immobilized by a disulfide bond to this functional group. However, methods of generating chemical reactions on surfaces, like this, are low in efficiency and cumbersome, and do not have guaranteed reproducibility.

In order to immobilize a receptor onto a metal surface of biosensors, a self-assembled monolayer (SAM) is typically formed on the metal surface. Alkanethiol compounds with a thiol group at one end thereof form a self-assembled monolayer by the chimosorption of the sulfur atom on the metal surface and because of hydrophobic attraction between the hydrocarbon chains thereof. If the alkanethiol compounds have a specific functional group at the end opposite to the thiol group side, the functional group can be used to immobilize another molecule.

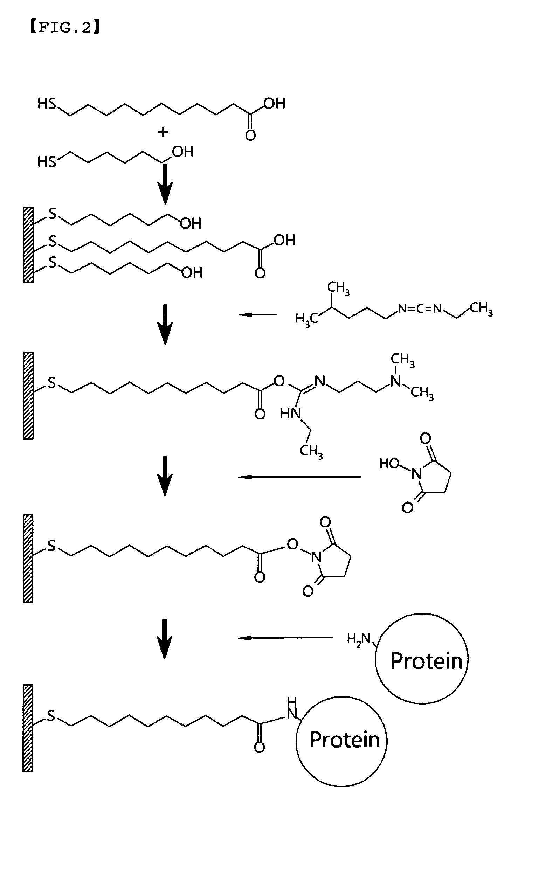

For example, after a self-assembled monolayer is created from 11-mercapto-1-undecanoic acid (MUA), N-hydroxysuccinimide (NHS) is introduced onto the carboxy group on the SAM by sequentially reacting the carboxy group with N-ethyl-N'-(3-dimethylaminopropyl)carbodiimide (EDC) and NHS, and then the NHS group bonded to the carboxy group can be utilized to immobilize a receptor molecule (refer to FIG. 2).

When a receptor molecule has a thiol group, a self-assembled monolayer may be formed of 11-amino-1-undecanethiol, and the amino group on the self-assembled monolayer is reacted with N-[-maleimidobutyrtloxy]succinimide (GMBS) to introduce a maleimide group into the position of the amino group, the maleimide group being able to immobilize receptor molecules having a thiol group.

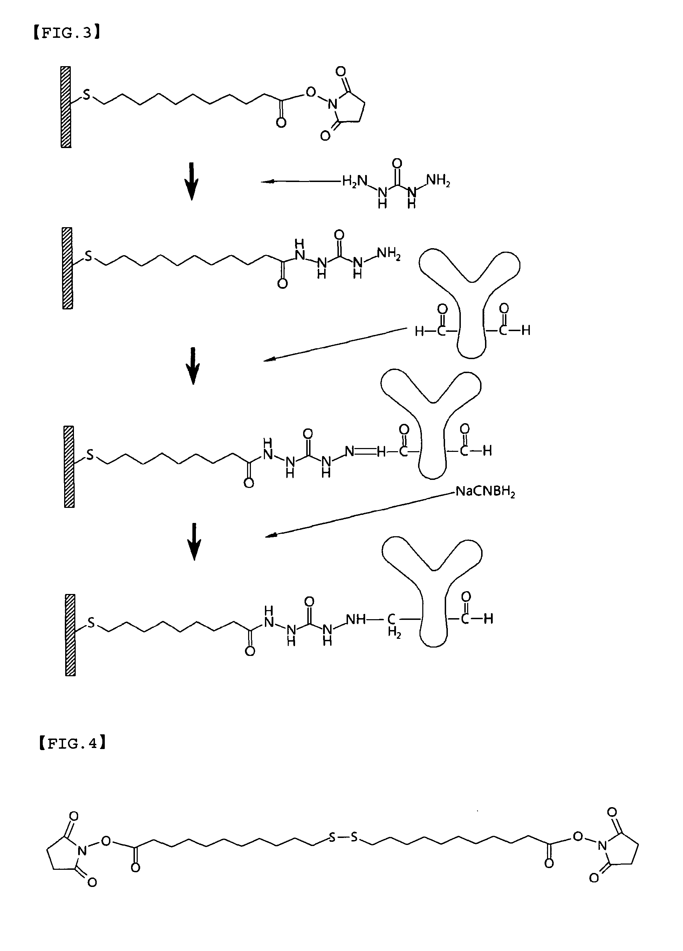

The immobilization of an antibody starts by reacting the antibody with sodium m-periodate (or sodium iodate) to form an aldehyde group on the carbohydrate of the antibody. An NHS group is introduced onto a metal surface in the same manner as in the immobilization of an amino group onto a metal surface and then replaced with an azide group by reaction with carbohydrazide. A reaction between the azide group and the aldehyde group of the antibody forms a Schiff's base which is stabilized by reaction with cyanoborohydride (refer to FIG. 3).

As described above, a conventional method of immobilizing an antibody using a hydrazide functional group requires a five-step reaction that includes an EDC/NHS reaction, a carbohydrazide reaction, an ethanolamine reaction, an antibody fixation reaction, and a cyanoborohydride reaction, starting from a sensor chip on which an SAM is formed. It takes about 3∼4 hours for the conventional method to finish.

Because chemical reactions on liposomes, like those on SAMs, are low in efficiency and cumbersome and have low reproducibility, alkanethiol compounds having functional groups necessary for immobilization are also employed. For example, if dithiobis(succinimidyl undecanoate) with an NHS group at each end (refer to FIG. 4) participates in the creation of an SAM, an NHS group capable of reacting directly with a molecule having an amino group can be introduced onto the surface of the SAM. However, such alkanethiol compounds with specific functional groups are not widely used because they are difficult to synthesize, expensive, and of low stability.

To overcome these drawbacks of chemical immobilization, a sensor chip with avidin fixed thereto was suggested. Avidin binds strongly and specifically to biotin. A relatively simple process may be used to chemically bind biotin to a receptor molecule. Further, biotin-bound antibodies are commercially available.

Thus, the addition of a biotin-bound receptor to an avidin-fixed sensor chip is a simple and rapid process for immobilizing the receptor. However, because avidin is apt to degenerate, sensor chips with avidin are difficult to store in addition to being expensive.

### Disclosure

### Technical Problem

Accordingly, the present invention has been made keeping in mind the above problems occurring in the prior art, and an object of the present invention is to provide a method for introducing a functional group onto a material surface that is simple and does not require that chemical reactions of many steps be conducted.

It is another object of the present invention to provide a method which allows the introduction of functional groups that are impossible or difficult to introduce using conventional methods and that allows inexpensive materials to be used to introduce the functional groups, thus bringing about an economical benefit to the surface chemistry.

### Technical Solution

In accordance with an aspect thereof, the present invention provides a method for introducing a functional group onto a surface of a material by applying a mixture of lipids and functional group-containing compounds to the surface.

In an embodiment, the method comprises mixing lipids with a compound having a functional group to form a liposome; and introducing the liposome onto a surface of a material.

As used herein, the term "material" is intended to refer to anything made of a substrate selected from among metals, ceramics, liposomes, semiconductors, and macromolecules. Particularly, it is used in connection with surfaces of biosensors, gas sensors, nanoparticles, chromatography media, semiconductors, polymers, liposomes, etc.

It is appropriate to construe the term "functional group" widely as a functional group necessary for imparting a specific function to the material. Typically, the functional group may be used when immobilizing a receptor or when it itself functions as a receptor.

Also, it is appropriate to construe the term "receptor", as used herein, widely to be a compound which can be directly or indirectly connected to a surface of a material to interact with a target.

Representative among receptors are biomolecules or organic functional groups that find applications in various fields related to, for example, biosensors, gas sensors, nanoparticles and liposomes for use in diagnosis and drug delivery, chromatography, etc. Examples of the biomolecules include proteins such as antibodies and hormones, nucleic acids, and carbohydrates. Any type of functional group ranging from simple carboxy or amino groups to complex biotin or folic acid falls within the scope of the present invention.

### Advantageous Effects

As described above, a method is provided for introducing a functional group onto a surface of a material using a liposome. The method of the present invention is simpler and can complete the introduction of a functional group within a shorter period of time and with higher efficiency and reproducibility, compared to conventional methods. Further, the method of the present invention allows the introduction of functional groups that are impossible to introduce in conventional methods. Thanks to these advantages, the method of the present invention is very effective for introducing functional groups onto surfaces of various materials such as biosensors, gas sensors, chromatography media, and nanoparticles for use in drug delivery or diagnosis.

### Description of Drawings

FIG. 1 is a conventional reaction scheme showing the introduction of dithiopyridyl group by the reaction of SPDP with a liposome conventionally made of PE.
FIG. 2 is a conventional reaction scheme showing the immobilization of a protein by changing a carboxyl group on an SAM with NHS by performing sequential reactions with EDC and NHS and then by reacting the NHS with an amino group on the protein.
FIG. 3 is a conventional reaction scheme showing the immobilization of an antibody by changing the NHS group formed in the same manner as in FIG. 2 into a hydrazide group.
FIG. 4 is a chemical formula of dithiobis(succinimidyl undecanoate).
FIG. 5 is a schematic view showing the structure of a lipid, presented to illustrate the present invention.
FIG. 6 is a schematic view showing the structures of a lipid bilayer and a liposome, presented to illustrate the present invention.
FIG. 7 is a schematic view showing the structure of a self-assembled layer formed upon the addition of alkanediol compounds to a metal surface, presented to illustrate the present invention.
FIG. 8 is a schematic view showing the structure of a lipid monolayer formed upon the addition of a liposome onto a hydrophobic self-assembled monolayer on a sensor surface, presented to illustrate the present invention.
FIG. 9 is a structural formula of biotin-PE (1,2-Dioleoyl-sn-Glycero-3-phosphatidylethanolamine-n-biotinyl), presented to illustrate the present invention.
FIG. 10 is a schematic view showing the structure of a lipid monolayer formed by overlaying, onto a hydrophobic self-assembled monolayer, a liposome prepared from a mixture of a substrate lipid and a lipid having a functional group necessary to immobilize a receptor onto the substrate lipid, presented to illustrate the present invention.
FIG. 11 shows structures of lipids having functional groups applicable to the purposes of the preferred embodiments of the present invention.
FIG. 12 shows structures of long-chain hydrocarbons having functional groups applicable to the purposes of the preferred embodiments of the present invention.
FIG. 13 is a schematic view showing the structure of a lipid monolayer formed by overlaying, on a hydrophobic self-assembled monolayer, a liposome prepared from a mixture of a substrate lipid and a hydrocarbon compound having a functional group, in accordance with a preferred embodiment of the present invention.
FIG. 14 shows three types of functional molecules which can self-assemble in accordance with preferred embodiments of the present invention: (a) a hydrocarbon with a functional group, (b) an alkanethiol with a functional group, (c) a lipid with a functional group, the functional group being represented by R.
FIG. 15 is a schematic view showing the structure of a gas sensor surface coated with a liposome prepared from a mixture of a substrate lipid and a lipid having a specific functional group in accordance with a preferred embodiment of the present invention.
FIG. 16 is a schematic view showing the structure of a gas sensor surface coated with a liposome prepared from a substrate lipid and a hydrocarbon compound having a specific functional group, in accordance with a preferred embodiment of the present invention.

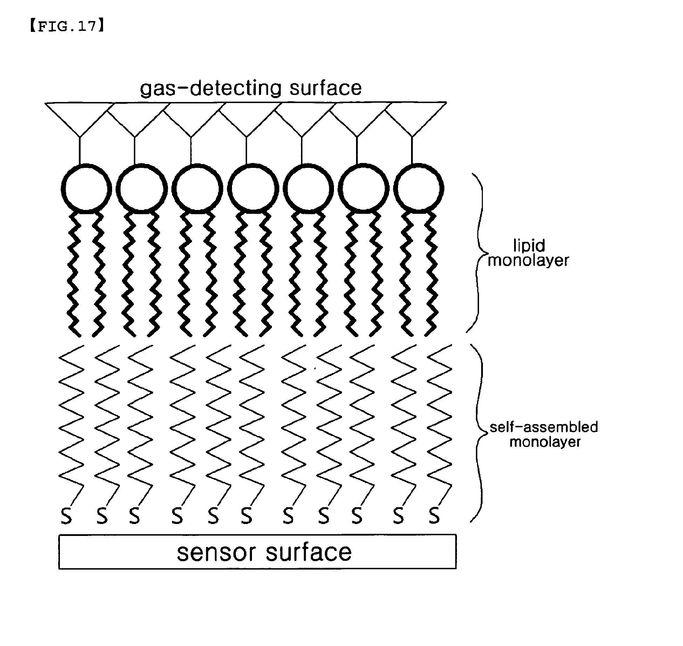

FIG. 17 is a schematic view showing the structure of a gas sensor surface coated with a liposome prepared only from lipids having a specific functional group, in accordance with a preferred embodiment of the present invention.
FIG. 18 is a graph showing a frequency change during the immobilization of an oxidized antibody using octanoic hydrazide, in accordance with a preferred embodiment of the present invention.
FIG. 19 is a graph showing a frequency change during the immobilization of an oxidized antibody according to a conventional method, presented for comparison with the graph of FIG. 18 according to a preferred embodiment of the present invention.
FIG. 20 is a graph in which frequencies of an immune sensor chip constructed by immobilizing an oxidized antibody with octanoic hydrazide according to a preferred embodiment of the present invention are plotted against the concentration of the antibody.
FIG. 21 is a graph in which frequencies of an immune sensor chip constructed by immobilizing an oxidized antibody with octanoic hydrazide according to a preferred embodiment of the present invention are plotted upon repetitive injections of the antibody at the same concentration.
FIG. 22 is a graph in which frequencies of an immune sensor chip constructed by immobilizing a thiolated antibody with MBP-PE according to a preferred embodiment of the present invention are plotted against the concentration of the antibody and upon repetitive injections of the antibody at the same concentration.
FIG. 23 is a graph that plots the frequencies of an immune sensor chip constructed by immobilizing a thiolated antibody with octadecyl maleimide according to a preferred embodiment of the present invention upon repetitive injections of the antibody at the same concentration.
FIG. 24 is a graph that plots frequencies of an immune sensor chip constructed by immobilizing a biotinylated antibody with avidin-conjugated biotin-PE according to a preferred embodiment of the present invention against the concentration of the antibody.
FIG. 25 is a graph in which gas sensors coated with the substrate lipid DPPC alone or a mixture of the substrate lipid DPPC with biotin-PE, MBP-PE or NBD-PE in accordance with a preferred embodiment of the present invention are compared to see the responses to different organic compounds in a gas state.
FIG. 26 is a graph in which two different gas sensors coated with liposomes prepared from a mixture of the substrate lipid DPPC with 3-dodecylthiophenone or dodecanenitrile in accordance with a preferred embodiment of the present invention are compared to see the responses to different organic gases. Ethyl acetate is ethyl 3-chloropionate.
FIG. 27 is a graph showing the frequency change of a biosensor coated with Ni²⁺ ions using octadecyl NTA in accordance with a preferred embodiment of the present invention when (His)₆-tagged MBP is bound to the surface of the biosensor.

### Modes for Invention

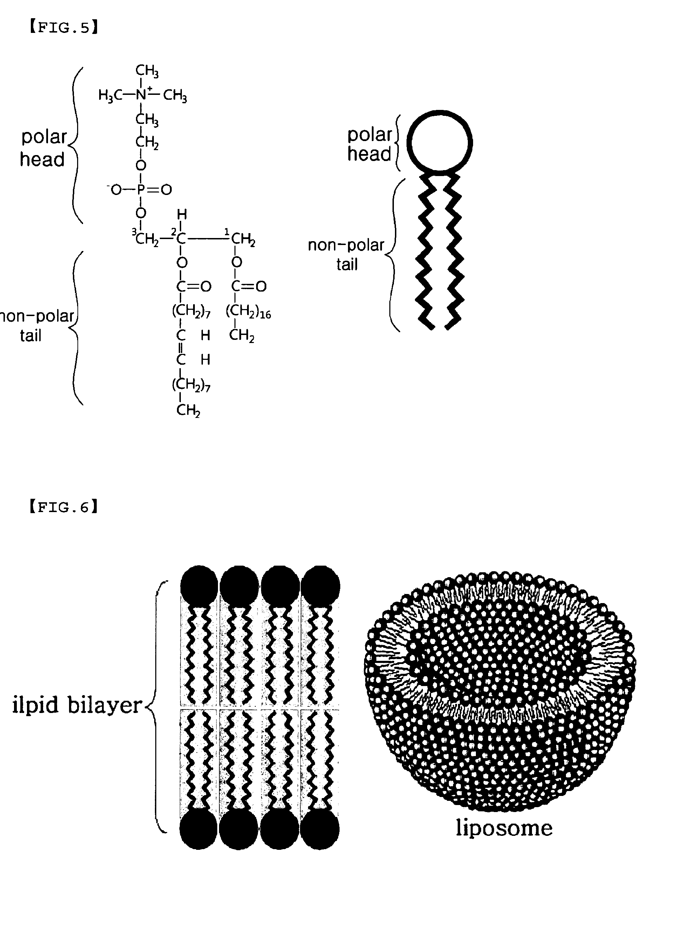

Below, a detailed description is given of the method of the present invention by means of embodiments which must not be construed as limiting the scope of the present invention. In this context, first, bases associated with the formation of lipid layers are elucidated with reference to FIGS. 5 to 10.

As shown in FIG. 5, a lipid consists of one polar head group and two non-polar tails. This structural feature allows lipids, when placed in an aqueous environment, to form a liposome consisting of a lipid bilayer with the hydrophilic head groups in contact with surrounding environment, sequestering the hydrophobic tails inside the lipid bilayer, as shown in FIG. 6.

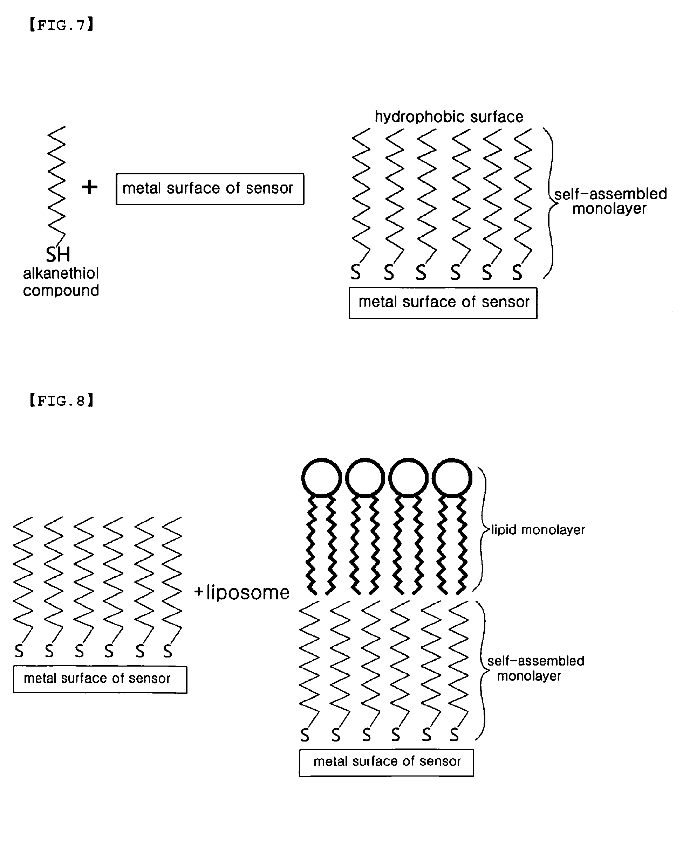

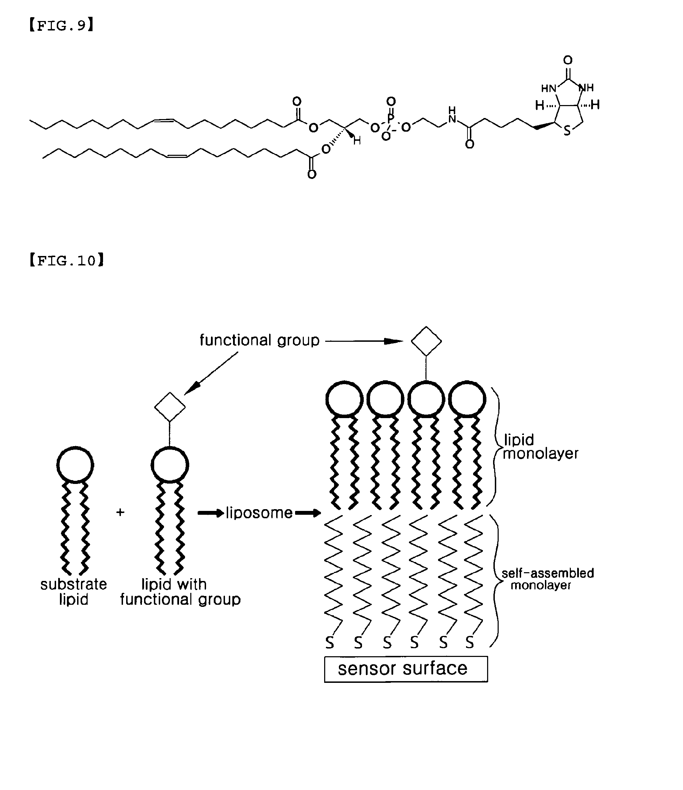

A self-assembled monolayer made of octadecanethiol, as illustrated in FIG. 7, has a hydrophobic surface. When the self-assembled monolayer is reacted with a liposome consisting of a lipid bilayer, as illustrated in FIG. 8, the hydrophobic tails of lipids of the liposome are brought into contact with the hydrophobic surface so that the lipid bilayer is changed into a lipid monolayer. If any of the lipids has a functional group, the functional group may be effectively introduced onto, for example, a biosensor surface. In an embodiment, if substrate lipids are used in combination with biotin-PE (refer to FIG. 9) to form a liposome, the functional group can appear on a surface of the resulting lipid monolayer and thus function as a receptor for immobilizing avidin thereto. As used herein, the term "substrate lipid" is intended to refer to a lipid without a functional group which can be used, in combination with a lipid having a functional group, to form a liposome.

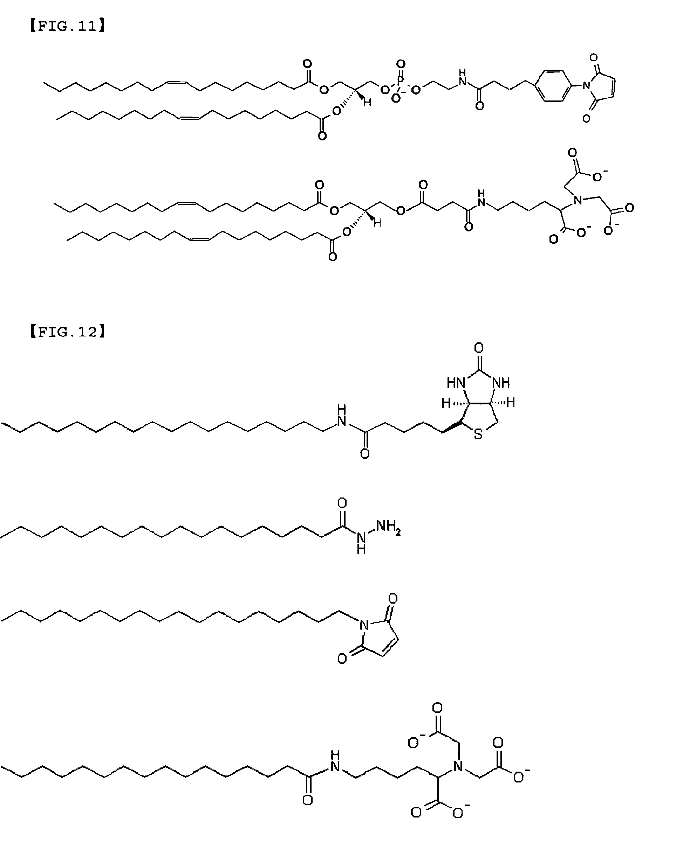

A compound having a functional group useful in the present invention may be "a lipid with a functional group" or "a long-chain hydrocarbon compound with a functional group." The compound having a functional group may be compatible with lipids because of its hydrophobic long tail to form a layer, giving the functional group a potential to interact directly with other molecules. Examples of the compound having a functional group useful in the present invention include biotin-PE, and the lipids with functional groups, shown in FIG. 11, such as 1,2-dipalmitoyl-sn-glycero-phosphoethanolamine-N-[4-(p-maleimidophenyl)butyramide (MBP-PE) and 1,2-dioleoyl-sn-glycero-3-{[N(5-amino-1-carboxypentyl) imino diacetic acid]succinyl (DOGS-NTA).

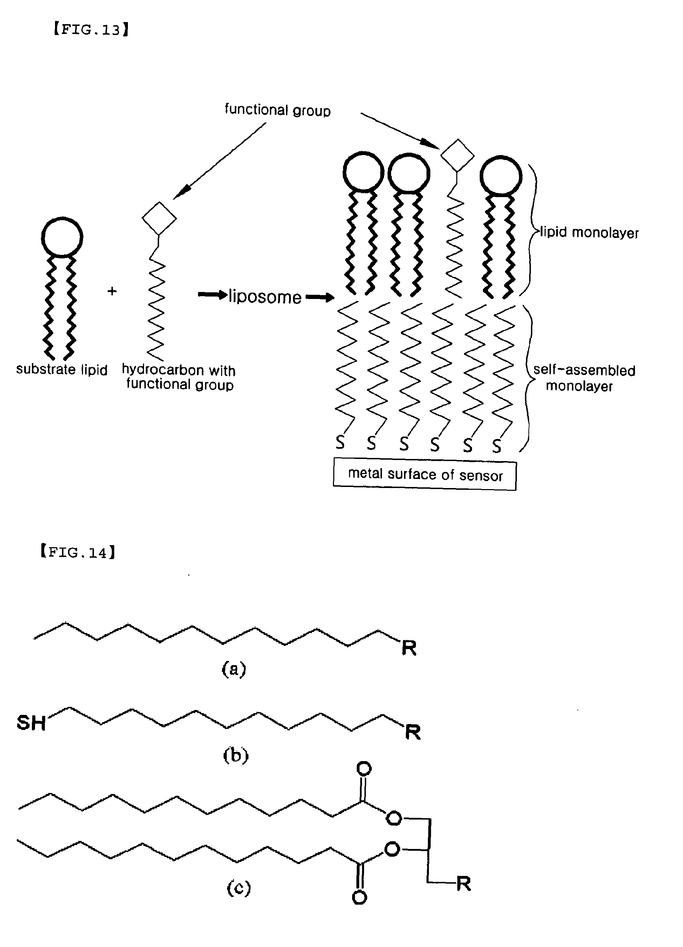

Representative among the compounds having functional groups are those shown in FIG. 12, that is, octadecyl biotin, octadecyl hydrazide, octadecyl maleimide, and octadecyl NTA (N-nitrilotriacetic acid). Long-chain hydrocarbons with functional groups may be used in mixture with lipid to form a liposome. Therefore, if a liposome made of long-chain hydrocarbons with functional groups may be used to form a lipid monolayer on a self-assembled monolayer, the functional groups may be introduced onto the surface of the material (FIG. 13).

FIG. 14 is a schematic view showing three different compounds with functional groups according to a preferred embodiment of the present invention. Having a simpler structure as shown in FIG. 14, the hydrocarbon with a functional group (a) has advantages over the alkanethiol compound with a functional group (b) and the lipid with a functional group (c) as follows. First, a simple structure of the aliphatic chain makes sure of its synthetic reaction without limitations. In addition, the pre-existence of a variety of long-chain hydrocarbons presents the opportunity of utilizing a wide spectrum of compounds with functional groups. Next, saturated aliphatic chains remain stable when stored thanks to their low reactivity. Finally, they are economically beneficial for these reasons.

In an embodiment of the present invention, a mixture of substrate lipids and a compound with a functional group may be stored in one vial in an amount suitable for being applied to one sensor chip and dried to form a film before being used to prepare liposomes. Alternatively, the mixture may be used to form liposomes which are then aliquoted in an amount suitable for being applied to one sensor chip and frozen for storage before use. In this case, the liposomes are preferably converted into SUV (small unilamella vesicles) by slight ultrasonication.

Also, the method of the present invention in which, as described above, compounds with functional groups in mixture with lipids are introduced onto a surface of a material can be applied to the surface chemistry of a material having a hydrophobic surface, any material whose surface can turn hydrophobic, lipid particles such as liposomes, and any material capable of combining with lipid bilayers. For instance, the method of the present invention may be applied to a biosensor based on surface plasmon resonance (SPR) or a material (usually metal) constituting the surface of a quartz crystal microbalance biosensor.

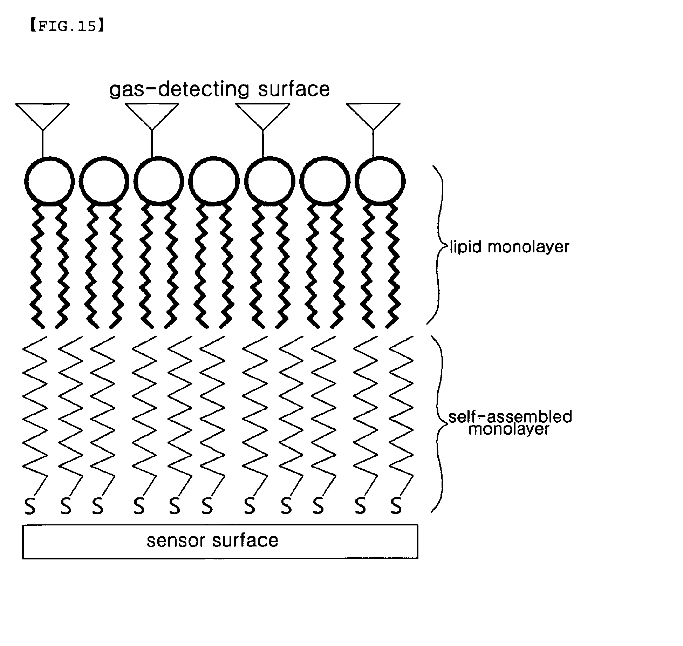

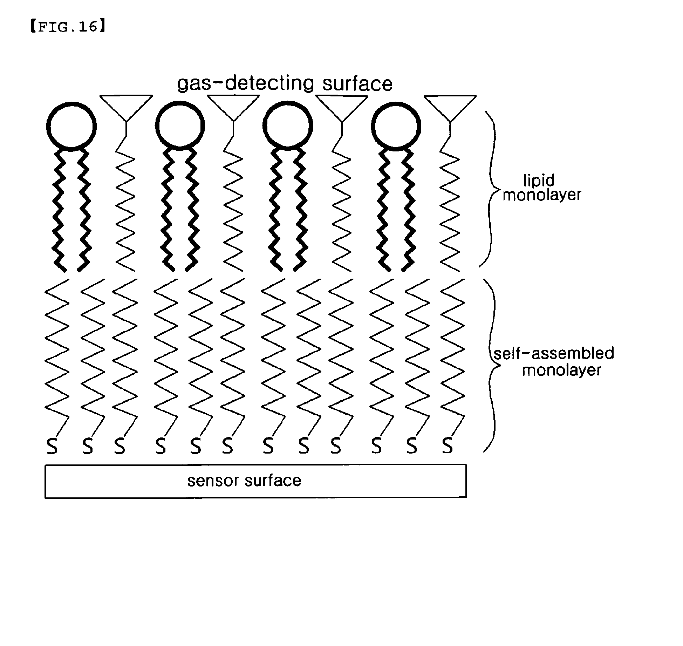

In addition to a sensor with a metal surface, such as a quartz crystal microbalance, a lipid layer may be applied to the surface of various types of sensors including carbon nanotube gas sensors, semiconductor-type gas sensors, nanowire FET gas sensors, and electrochemical gas sensors. Thus, the use of liposomes containing compounds with functional groups makes it possible to construct numerous gas sensors which have different surface chemistry from each other, as illustrated in FIGS. 15 and 16. These sensors with different surface chemistries exhibit selective responses to organic gases and thus can be gas sensors specific for target gases.

Usually targeting small organic compounds as analytes, gas sensors needs to have a surface that has uniform chemical features. In this context, gas sensors may be coated with lipids having the same functional group. Ultimately, a combination of various gas sensors may result in an electric nose (E-nose).

Having a hydrophobic surface, C₁₈ silica gel can be coated with a lipid layer. Thus, when the method of the present invention is applied thereto, C₁₈ silica gel can serve as a media for chromatography that has various functional groups introduced thereinto. For example, the application of a liposome containing octadecyl NTA may result in a material capable of separating histidine-tagged proteins.

Consisting of a lipid bilayer, liposomes allow the direct introduction of a compound having a functional group thereinto. If a liposome is prepared with a compound having the proper functional group, targeting ligands, for example antibodies, may be readily introduced into the liposome. Such liposomes with targeting ligands introduced thereinto may be used for the delivery of therapeutic agents or the diagnosis of diseases.

A hydrophobic poly(dimethylsiloxane) (PDMS) surface may be coated with a lipid monolayer. On the other hand, when the PDMS surface is changed to be hydrophilic by oxidation with plasma, it may be coated with a lipid bilayer. Like this, functional groups may be introduced onto PDMS surfaces using various methods.

Nanoparticles can be applied to hypersensitive biosensors, diagnosis, drug delivery, bioscience, etc. The ultimate purpose of such an application resides in biofunctionalization. The method according to the present invention is also used for biofunctionalization.

For example, a lipid monolayer may be formed on trioctylphosphine oxide (TOPO)-stabilized quantum dots because of the hydrophobic surface of TOPO. Particularly, overlaying the lipid monolayer on the TOPO layer, instead of substituting in the TOPO layer, has the advantage of concealing the sensitive surface of quantum dots. In the case of gold or silver nanoparticles, a hydrophobic SAM may be formed of alkanethiols on the surface of the nanoparticles and then overlaid with a lipid monolayer. Recently, nanoparticles surrounded directly with lipids have been reported. Carbon nanotubes allow the formation of a lipid layer on the surface thereof because the surface is hydrophobic. Therefore, functional groups can be introduced onto the surface of carbon nanoparticles according to the method of the present invention, imparting biofunctionality to nanoparticles.

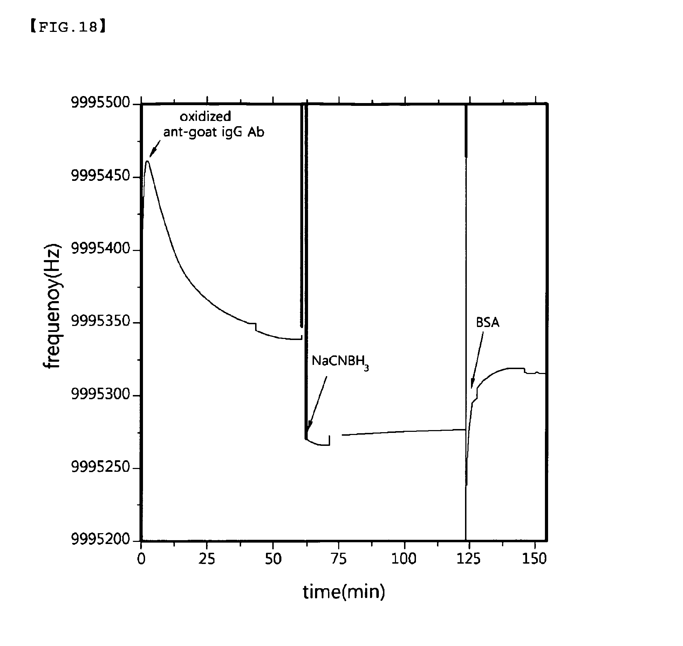

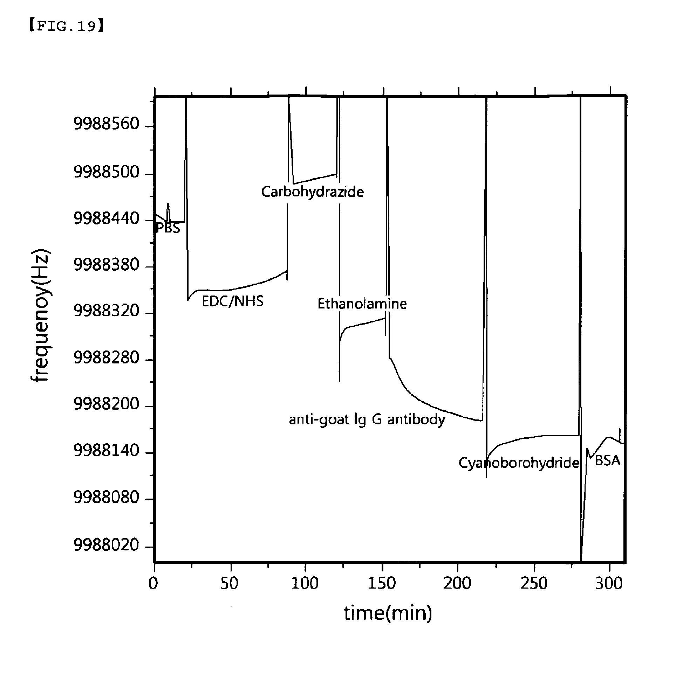

With reference to FIGS. 18 to 26, a detailed description will be given of introducing functional groups onto the surface of materials in the following Examples.

### EXAMPLE 1: Immobilization of Antibody onto Biosensor

### Surface Using Octanoic Hydrazide

### Preparation of biosensor system

A quartz crystal microbalance (QCM) was purchased from Crystal Sunlife. The quartz crystal microbalance was tetragonal in shape with a dimension of 8x8 mm, had a 5 mm- diameter gold electrode and a resonance frequency of about 10 MHz. The frequency of a quartz crystal microbalance proportionally decreases as its mass decreases. If a receptor capable of binding to an analyte is immobilized on the surface of the quartz crystal microbalance, its frequency changes as a result of the binding of the analyte to the surface. On the basis of this property, the quartz crystal microbalance was made to function as a biosensor. A quartz crystal microbalance biosensor system was constructed in the lab of the present inventors.

A well cell adapted to add a solution onto a quartz crystal microbalance electrode was used in combination with a flow cell adapted to flow the solution through a tube and be in contact with the quartz crystal microbalance electrode. In the well cell, a receptor protein binding specifically to an analyte was immobilized, followed by substitution with the flow cell. A buffer was fed through a pump while an SAMple to be analyzed was fed through an injection valve. When the analyte went through the surface of the QCM in the flow cell and bound to an antibody, the mass of the QCM changed and thus so did its frequency. This altered frequency was measured and transmitted to a computer where the data was analyzed.

### Formation of self-assembled monolayer (SAM)

The electrode surface of the quartz crystal microbalance was cleansed. In this regard, the quartz crystal microbalance was immersed at 60°C for 1 min in a piranha solution (H₂SO₄ :H₂O₂ = 7:3), rinsed with distilled water and ethanol, and dried with nitrogen gas. Subsequently, the quartz crystal microbalance was placed in a 2 nM solution of 1-octadecanethiol (Sigma-Aldrich, USA) in ethanol for 12-15 hrs with stirring, to form a self-assembled monolayer (SAM) on the electrode surface. The resulting sensor chip in which the SAM was created was withdrawn, rinsed with ethanol and dried with nitrogen gas before being applied to a cell.

When hydrocarbons with thiol groups, that is, alkanethiols, such as oactadecanethiol, are added, the sulfur atom undergoes chemiadsorption onto the metal surface, with attraction occurring between the hydrophobic hydrocarbon chains, to form an SAM, as shown in FIG. 7.

### Preparation of liposome

A liposome to be combined with the SAM was prepared. In this example, a lipid mixture for liposomes was obtained by mixing dipalmitoyl phosphatidyl choline (DPPC) at a molar ratio of 2:1 with octanoic hydrazide. In the mixture, DPPC was used as a substrate lipid while octanoic hydrazide served to provide the liposome with a hydrazide group as a functional group. Octanoic hydrazide has the same functional group as, but has a shorter hydrocarbon chain than does octadecyl hydrazide, shown in FIG. 12.

Lipids were placed in a vial. When the lipids were dried in the form of a film in such an amount that the liposome to be formed therewith could be used to immobilize a receptor onto only one sensor chip, 120 µL of 0.1 M 4-(2-Hydroxyethyl)piperazine-1-ethanesulfonic acid (HEPES) buffer, pH 7.0 was added to the lipid film vial to smoothly spread the film. After purging with nitrogen gas, the vial was sealed and ultrasonicated to form small unilamella vesicles (SUV).

Ultrasonication may be performed in two manners. First, the vial may be floated on water warmed to a temperature of 50∼60°C in an ultrasonic cleaner. Alternatively, the vial may be floated on water filling 2/3 of the volume of a 500 mL beaker, and then ultrasonicated for 20 min with an ultrasonic homogenizer. The content of the vial changing in color from opaque white to a slightly milky, clear color represents the formation of SUVs. When the buffer was added to the lipid film vial, multilamella vesicles (MLV) in which many layers of lipids had piled up were formed, and the appearance changed to opaque white. The application of ultrasonic energy disrupted the attraction between lipid molecules so that they were rearranged to equilibrium. As a result, SUV was formed, with the appearance of a slightly milky, transparent color.

### Combination of liposomes with SAM

The liposomes prepared above were reacted with a sensor chip in which a self-assembled monolayer was formed, as follows. A QCM on which an SAM of 1-octadecanethiol was formed was installed in a well cell. Immediately after the surface of the SAM of 1-octadecanethiol was washed three times with 100 µL of 40 mM octyl glucoside, 100 µL of a liposome solution was added to the cell and incubated at 50°C for 30-60 min. The well cell was connected with a frequency counter. After removal of the liposome solution, 100 µL of 0.1 M NaOH was added into the cell which was then incubated for 30 sec and washed three times with phosphate buffered saline (PBS). The biosensor thus constructed was examined to see whether an antibody was immobilized thereonto.

### Oxidation of antibody

Before the immobilization of an antibody (anti-goat IgG Ab) onto the surface of QCM, the carbohydrate moiety contained in the antibody was oxidized to form an aldehyde group. Reacting with hydrazide to form a covalent bond, the aldehyde group could immobilize the antibody in a constant direction. PBS containing the antibody (anti-goat IgG Ab) at a concentration of 0.5 mg/mL was mixed with 0.2 mL of a 50 mM sodium m-periodate solution, followed by incubation for 30 min in a dark place to carry out the reaction. The sodium m-periodate that remained unreacted was removed by dialysis against buffer A (100 mM sodium acetate buffer, pH 5.5).

### Immobilization and identification of antibody

The surface of QCM on which an SAM and a liquid monolayer were sequentially formed was washed three times with 100 mM sodium acetate, pH 5.5, and incubated for one hr with the sodium m-periodate-treated antibody. The QCM was washed three times with deionized water and reacted for one hr with 100 µL of 0.1 M cyanoborohydride to reduce the double bond, thus stabilizing the immobilization of the receptor having an aldehyde group. Finally, the QCM was treated for 30 min with a blocking buffer (blocking buffer; (1 mM EDTA, 0.25% bovine serum albumin, 0.1% sodium azide, 0.05% Tween-20 in PBS) to prevent proteins from non-specific adsorption onto the surface.

FIG. 18 is a graph showing a frequency change during the immobilization of an antibody. As seen in this graph, frequencies gradually decrease upon reaction with oxidized antibody, indicating that the mass on the QCM surface increases with the binding of the antibody. On the other hand, the reaction with NaCNBH₃ did not cause a change in mass and thus in frequency. It took 150 min to complete the entire procedure of this method including the two steps of chemical reaction and the blocking step with BSA which was to prevent non-specific adsorption.

However, as is understood from the data of FIG. 18, the time required to complete this method can be reduced into 90 min or shorter even though inclusive of the time required for the formation of the lipid monolayer because the antibody immobilization is almost completed within 30 min and the reduction with NaCNBH₃ also proceeds rapidly. In contrast, the conventional methods illustrated in FIGS. 2 and 3 must undergo a chemical reaction of five steps, requiring at least three hours even though as much time as possible was saved. In addition, the conventional methods require at least four reaction steps while the method of the present invention requires only two reaction steps, which is more advantageous in terms of immobilization efficiency and reproducibility. In addition, the user unfamiliar with chemistry can readily access the method of the present invention because it does not require that various kinds of reagents be used.

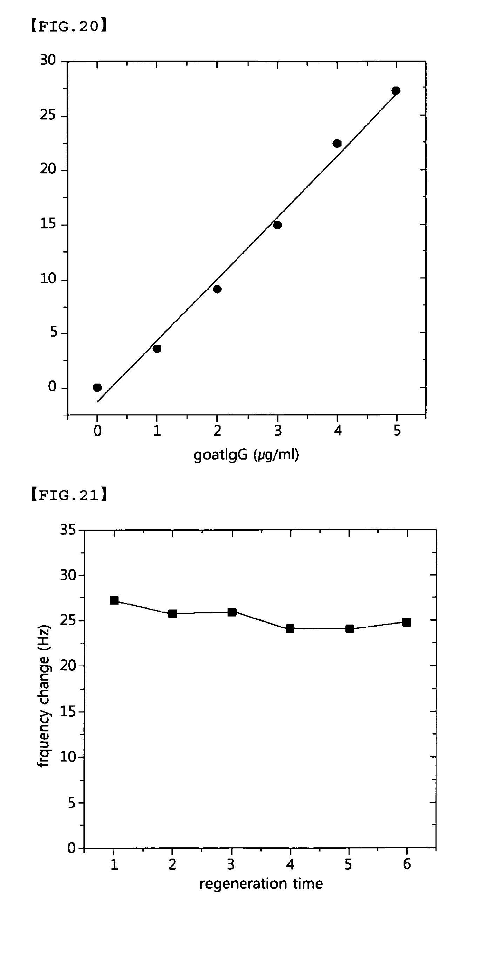

To examine whether the immobilized antibody (anti-goat IgG antibody) normally functioned as a receptor, an antigen (goat IgG) was added at different concentrations. As shown in FIG. 20, the frequency changed in a dose-dependent manner. In this context, after frequencies were monitored with a concentration of the antigen, a dissociation solution (0.2M Glycine-HCl, pH 2.3 + 1% DMSO) was added to completely remove the bound antigen before the addition of the antigen at a different concentration. Frequencies were monitored while the antigen was repeatedly injected at the same concentration 5 µg/mL. As seen in FIG. 21, high reproducibility was obtained.

The observation that the quartz crystal microbalance changes in frequency in proportion to concentration and can be used repetitively implies the stable immobilization of the receptor, that is, the antibody, via a chemical bond. Although only the experimental data of octanoic hydrazide was provided, the same results could be obtained when longer carbon chain compounds such as dodecanonic hydrazide and octadecyl hydrazide were used.

### EXAMPLE 2: Immobilization of Antibody onto Biosensor

### Using MBP-PE

### Preparation of biosensor system

The biosensor system of Example 1 was employed.

### Formation of SAM

An SAM was formed in the same manner as in Example 1.

### Preparation of liposome

A liposome to be combined with the SAM was prepared. In this example, a mixture of DPPC and MBP-PE was used. In the mixture, DPPC was used as a substrate lipid while MBP-PE served to provide the liposome with a maleimide group as a functional group. DPPC was dissolved at a concentration of 12 mg/mL in a solvent of chloroform : methanol (1 : 2). Separately, MBP-PE was dissolved at a concentration of 8.2 mg/mL in chloroform. To 200 µL of the DPPC solution was added 200 µL of the MBP-PE solution. Of the resulting mixture, 40 µL was uniformly spread on a glass vial. While nitrogen gas was smoothly fed, the lipid solution was dried to form a film. Vials, unless immediately used, were filled with nitrogen gas and stored at -20°C or -70°C until use. The remaining procedure was conducted in the same manner as in Example 1.

### Combination of liposome with SAM

The combination of the liposome with the SAM was performed in the same manner as in Example 1.

### Examination of the immobilization of a thiolated receptor

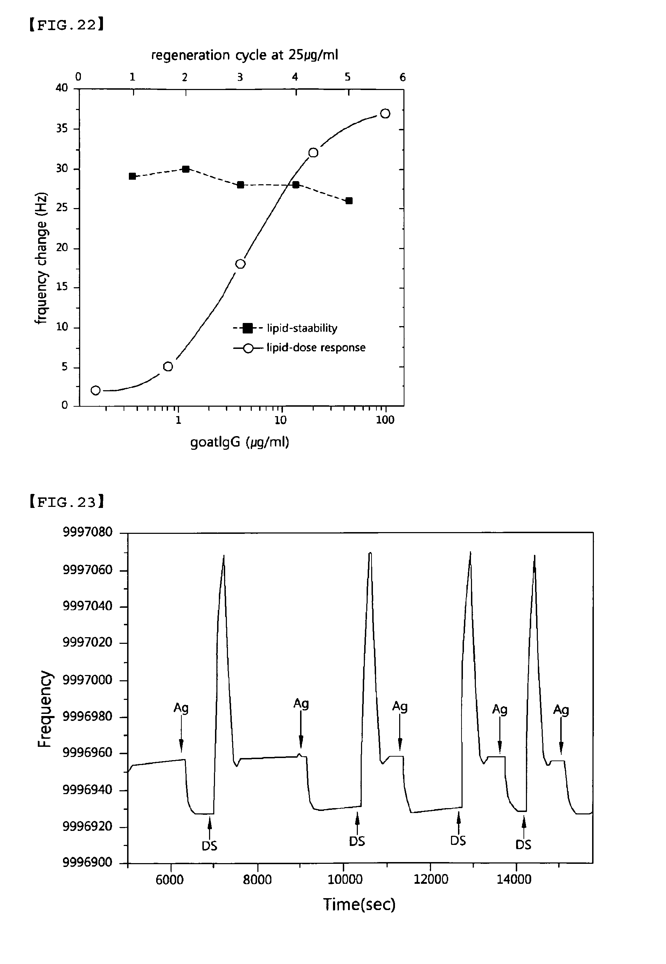

A thiol group can be introduced into a peptide simply by the addition of a cysteine residue. A Traut's reagent (2-iminothiolane-HCl) is typically used for the thiolation of a protein. To the QCM surface on which the SAM and the lipid monolayer were overlaid sequentially was added 100 µL of an antibody (anti-goat IgG antibody, 50 µg/mL) thiolated with Traut's reagent, followed by incubation for one hour. The antibody solution was removed and the QCM surface was washed three times with PBS. The QCM was reacted for 30 min with 100 µL of a 50 µg/mL bovine serum albumin (BSA) solution. After the thiolated antibody was immobilized onto the quartz crystal microbalance in this manner, an antigen (goat IgG) was injected at different concentrations. The frequencies were observed to change in a dose-dependent manner, as shown in the solid line plot of FIG. 22.

In this context, after frequencies were monitored with changes in the concentration of the antigen, a dissociation solution was added to completely remove the bound antigen before the addition of the antigen at another different concentration. Frequencies were monitored while the antigen was repeatedly injected at the same concentration 25 µg/mL. As seen in the dotted plot of FIG. 22, constant frequencies were maintained. The observation that the quartz crystal microbalance changes in frequency in proportion to concentration and can be used repetitively implies the stable immobilization of the receptor, that is, an antibody, via a chemical bond.

### EXAMPLE 3: Immobilization of Antibody on Biosensor

### Surface Using Maleimide

### Preparation of biosensor system

The biosensor system of Example 1 was employed.

### Formation of SAM

An SAM was formed in the same manner as in Example 1.

### Preparation of liposome

The same procedure as in Example 1 was repeated with the exception that octadecyl maleimide, instead of octanoic hydrazide, was used. The structure of octadecyl maleimide is shown in FIG. 12.

### Combination of liposome with SAM

The combination of the liposome with the SAM was performed in the same manner as in Example 1.

### Examination of the immobilization of a thiolated receptor

After an antibody (anti-goat IgG antibody) was immobilized onto a quartz crystal microbalance in the same manner as in Example 2, an antigen (goat IgG) was repetitively fed at a constant concentration (100 µg/mL). In this context, after frequencies were monitored, a dissociation solution was added to completely remove the bound antigen before subsequent addition of the antigen. As seen in FIG. 23, the same patterns of frequency change were repeated within a constant range.

### EXAMPLE 4: Construction of Avidin-Immobilized Biosensor

### Preparation of biosensor system

The biosensor system of Example 1 was employed.

### Preparation of liposome

A liposome was prepared in the same manner as in Example 1, with the exception that a 0.5 mg/mL biotin-PE solution in chloroform, and egg lecithin were used, instead of the MBP-PE solution, and DPPC as a substrate lipid, respectively. The liposome was aliquoted for single uses and stored at -80°C.

### Combination of liposome with SAM

The combination of the liposome with the SAM was performed in the same manner as in Example 1.

### Examination of the immobilization of avidin

To the QCM surface on which the SAM and the lipid monolayer were overlaid sequentially was added a 50 µg/mL avidin solution, followed by incubation for 10 min. After the immobilization of avidin onto the quartz crystal microbalance in this manner, a biotinylated antibody (anti-rabbit IgG antibody) was added to the avidin. Because avidin is a tetrameric biotin-binding protein, the avidin immobilized onto the surface of the quartz crystal microbalance bound the biotin conjugated to the antibody to immobilize the antibody onto the surface of the quartz crystal microbalance.

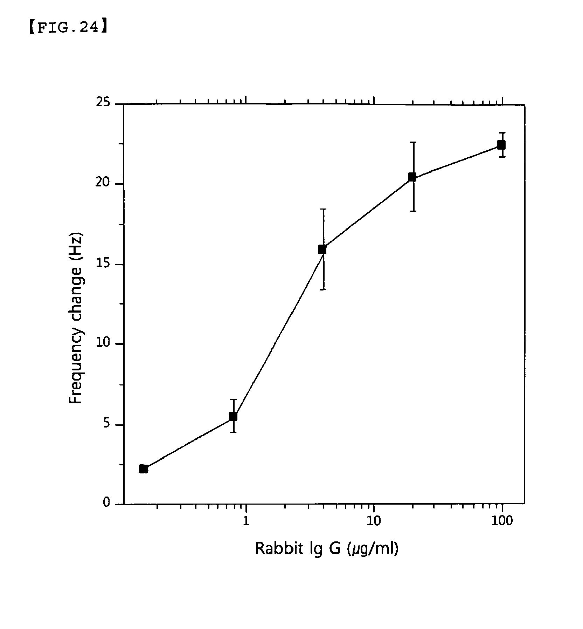

To the antibody-immobilized quartz crystal microbalance, an antibody (rabbit IgG) was injected at different concentrations. After frequencies were monitored with changes in the concentration of the antigen, a dissociation solution was added to completely remove the bound antigen before the addition of the antigen at another different concentration. The frequencies were observed to change in a dose-dependent manner, as shown in FIG. 24, implying that the antibody might be stably immobilized.

### EXAMPLE 5 : Preparation of Gas Sensor Using Lipid

### Formation of SAM

An SAM was formed in the same manner as in Example 1.

### Preparation of liposome

Four types of liposomes were prepared, with DPPC serving as a substrate lipid. One type of liposomes was formed of the substrate lipid alone. For the other three types, combinations of the substrate lipid with biotin-PE, MBP-PE and 1,2-dioleoyl-sn-glycero-3-phosphoethanolamine-N-(7-nitro-2-1,3- benzoxadiazol-4-yl)(NBD-PE) at a mass ratio of 24:1 were used, respectively. Liposomes were prepared in the same manner as in Example 1.

### Combination of liposome with SAM

The combination of the liposome with the SAM was performed in the same manner as in Example 1.

### Construction of electronic nose (e-nose)

Sensors with various functional groups, prepared as described above, were arranged in an array to construct an e-nose.

In addition to the manner of this example, only single gas sensors may be employed. Also, various different sensors may be arranged to construct an electronic nose for analyzing various compounds. Because different gas sensors responded to respective organic compounds in different patterns, the analysis of the patterns allowed the identification of the organic compounds.

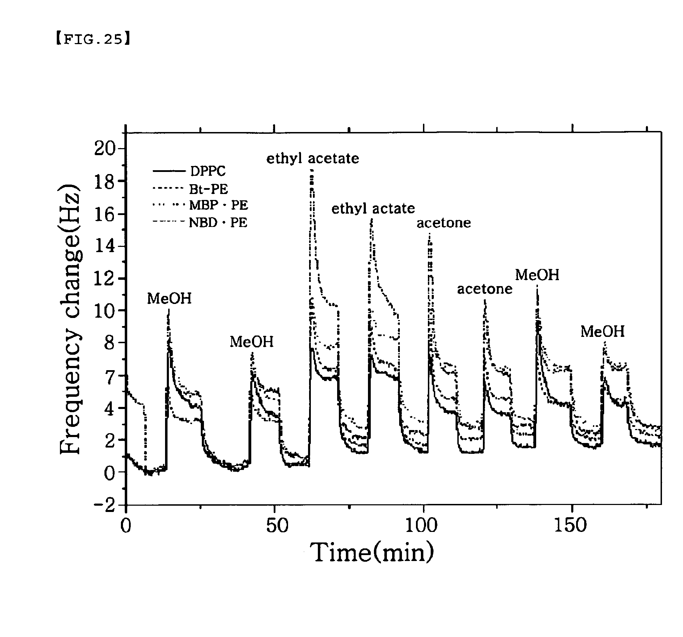

In this example, four quartz crystal microbalances were respectively coated with the four lipids DPPC, biotin-PE, MBP-PE and NBD-PE to construct four types of gas sensors which were then analyzed for reactivity to organic compounds in gas states. As shown in FIG. 25, the e-nose was observed to respond in different patterns according to gas types.

### EXAMPLE 6 : QCM Gas Sensor Using Long-Chain Hydrocarbon with Two Types of Functional Groups

### Formation of SAM

An SAM was formed in the same manner as in Example 1.

### Preparation of liposome

Two different liposomes applicable to gas sensors were prepared using egg lecithin as a substrate lipid. One liposome was prepared from a mixture of the substrate lipid : 3-dodecylthiophenone at a molar ratio of 2:1 while the other was based on a mixture of the substrate lipid : dodecanenitrile at a molar ratio of 2:1. Liposomes were prepared in the same manner as in Example 1.

### Combination of liposome with SAM

The liposome and the SAM were combined in the same manner as in Example 1.

### Examination of reactivity to different organic gases

Two types of gas sensors constructed above were placed in one chamber into which different organic gases were then fed sequentially while frequencies were monitored. For this, nitrogen was used as a carrier gas and flowed at a rate of 100 ccm (cc per min). After one organic gas was fed, the chamber was purged with nitrogen to separate the organic gas molecules bound to the sensor surface and thus to recover the base line prior to the provision of a different gas. The evaporation pressures of the corresponding materials at room temperature were used as the concentrations of the organic gases.

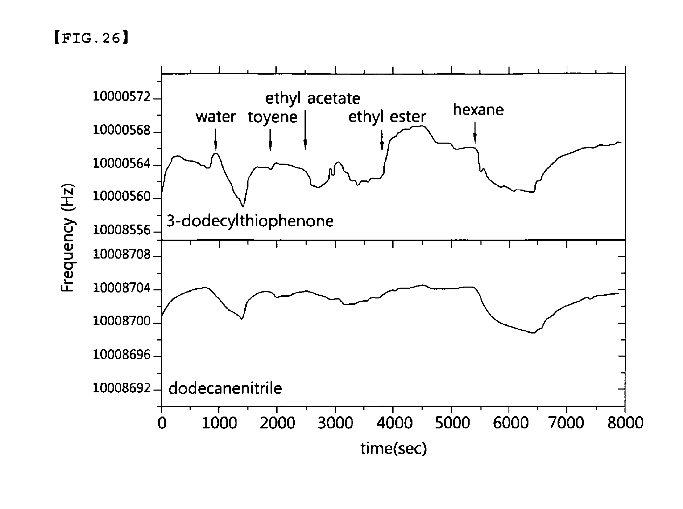

As a result, the two different gas sensors exhibited similar response patterns to water gas and hexane, but their response patterns to toluene, ethyl acetate and ethyl 3-chloropropionate were different from each other (refer to FIG. 26). These results indicate that the response of the sensor to specific organic gases is dependent on the functional groups of FAC used to apply to the QCM surface. Therefore, various different gas sensors may be constructed by coating sensor surfaces with a variety of functional groups.

### EXAMPLE 7 : Immobilization of Fusion Protein onto Biosensor Surface Using Octadecyl NTA

### Formation of SAM

An SAM was formed in the same manner as in Example 1.

### Preparation of liposome

The same procedure as in Example 1 was repeated with the exception that octadecyl NTA and egg lecithin were used, instead of octanoic hydrazide, and DPPC as a substrate lipid, respectively.

### Combination of liposome with SAM

The liposome was combined with the SAM in the same manner as in Example 1.

### Examination of the immobilization of fusion Protein on biosensor surface

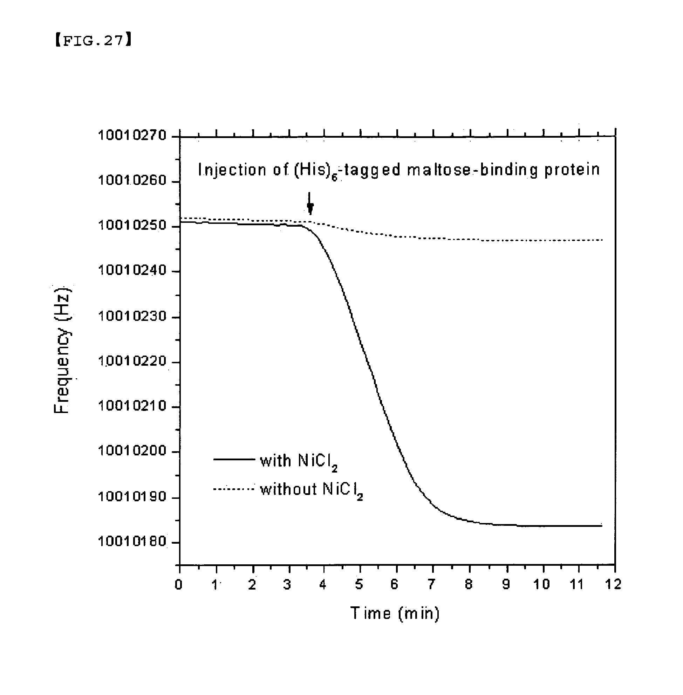

To the QCM surface on which the SAM and the lipid monolayer were overlaid sequentially was added a 0.1 M NiCl₂ solution, so that Ni²⁺ ions were immobilized by the three carboxyl groups of NTA via coordination bonds. Next, a maltose binding protein (MBP) tagged with six tandem histidine residues ((His)₆-tag) was injected at a concentration of 20 g/mL. As shown in FIG. 27, the frequency was observed to change with the binding of the (His)₆-tagged MBP to the QCM surface. In contrast, when (His)₆-tagged MBP was injected in the absence of the NiCl₂ solution, no changes were detected on the frequencies of the QCM. These data indicate that the (His)₆-tagged MBP was immobilized onto the biosensor surface by the Ni²⁺ ions forming a coordinate bond to the NTA of the surface, proving that the NTA functional group had been introduced onto the biosensor surface.

## Claims

1. A method for introducing a functional group onto a surface of a material, wherein a mixture of a lipid and a compound having the functional group is applied to the surface of the material.

2. The method of claim 1, comprising:
mixing lipids with a compound having a functional group to form a liposome; and
applying the liposome onto a surface of a material.

3. The method of claim 1 or 2, wherein the functional group is used to immobilize a receptor onto the surface or the functional group itself functions as the receptor.

4. The method of claim 2, wherein the liposome is introduced in a form of a monolayer or a bilayer onto the surface of the material.

5. The method of claim 1 or 2, wherein the compound having the functional group is selected from the group consisting of a lipid with the functional group, a long-chain hydrocarbon with the functional group, and a combination thereof.

6. The method of claim 1 or 2, wherein the material is selected from the group consisting of metals, ceramics, liposomes, semiconductors, macromolecules, and combinations thereof.

7. The method of claim 5, wherein the long-chain hydrocarbon with a functional group is selected from the group consisting of octadecyl biotin, octadecyl hydrazide, octadecyl maleimide, octadecyl NTA, and a combination thereof.

8. The method of claim 6, wherein the material is anything of matter constituting the surface of a biosensor or a gas sensor.

9. The method of claim 6, wherein the material is a chromatography medium.

10. The method of claim 6, wherein the material is a nanomaterial.

11. The method of claim 6, comprising:
forming a self-assembled monolayer (SAM) on the surface of the material;
preparing a liposome with the mixture of lipids and the compound having the functional group; and
combining the liposome with the SAM.
